# EUROPEAN PATENT APPLICATION

(11) **EP 4 797 216 A1**
(43) Date of publication of application: **26.08.2026**
(21) Application number: 26150192.8
(22) Date of filing: 05.01.2026
(51) Int. Cl.: G06V 10/25, G06V 10/26, G06V 10/62, G06V 10/764, G06V 20/52, G06V 20/64

(54) **CARGO MONITORING USING A THREE-DIMENSIONAL VISION SYSTEM**

(30) Priority: 25.02.2025 US 202519062573
(71) Applicant: The Boeing Company, Arlington, VA 22202 (US)
(72) Inventor: ERIGNAC, Charles Arthur, ARLINGTON, 22202 (US); CALLAHAN, Kevin S., ARLINGTON, 22202 (US); MEDINA, Jose Alberto, ARLINGTON, 22202 (US)
(74) Representative: Plasseraud IP

(57) **Abstract**

One aspect is directed to a method of monitoring cargo that is moving within a work area. The method comprises: capturing images of the cargo with cameras as the cargo moves through the work area; detecting the cargo in the images; generating an approximation of the cargo in the images with a three-dimensional bounding box that extends around the cargo; tracking a position of the cargo and movement of the cargo through the work area based on a location within a three-dimensional Cartesian frame of the bounding box in the images; and generating a three-dimensional mesh model of the cargo.

## Description

### TECHNOLOGICAL FIELD

The present disclosure relates generally to the field of cargo handling and, more specifically, to a vision system that generates a three-dimensional bounding box from captured images to detect and track the cargo as it moves through a work area.

### BACKGROUND

A wide variety of vehicles are used to transport cargo. Examples include but are not limited to aircraft, ocean going vessels, and trucks. The transport process generally includes loading the cargo onto the vehicle, positioning the cargo in the vehicle, transporting the cargo from a first location to a second location, and then unloading the cargo. There is a need to identify and monitor the cargo during the transport process.

Existing systems provide various manners of identifying the cargo that is loaded onto a vehicle. However, these systems are not able to accurately determine the volume of the cargo. This leads to shipping inefficiencies as it is difficult to identify cargo containers/pallets that are not fully loaded.

Some existing systems use the weight of the cargo to identify and/or provide for loading the vehicle. However, it is difficult to accurately weigh the cargo due to the various sizes and dimensions of the cargo. Further, even if the weight is accurately determined, it is difficult and/or ineffective to determine the volume based on the weight. Without an accurate volume determination, inefficiencies in the loading process continue to occur.

Some existing systems require an operator to visually inspect the cargo. The operator determines the efficiency of the packing based on the observed aspects of the cargo. However, the visual identification of the cargo has been found to be inaccurate. The criteria for determining the volume are subjective and lead to inaccurate results between different operators.

Because the existing systems do not provide for accurate volume estimation, the loading of individual cargo and the overall loading of the vehicle suffer. Further, there is no mechanism to identify the inefficiencies that allow for additional packing/repacking of the cargo.

### SUMMARY

One aspect is directed to a method of monitoring cargo as defined in claims 1 to 7.

One aspect is directed to a computing device configured to monitor cargo within a work area as defined in claims 8 to 15. The computing device comprises processing circuitry, and memory circuitry comprising program instructions therein that, when executed by the processing circuity, configures the computing device to perform the method of any one of claims 1 to 7.

The features, functions and advantages that have been discussed can be achieved independently in various aspects or may be combined in yet other aspects, further details of which can be seen with reference to the following description and the drawings.

### BRIEF DESCRIPTION OF THE DRAWINGS

Figure 1 is an isometric view of an aircraft that is equipped with a vision system.
Figure 2 is an isometric view of cargo positioned on a platform in preparation for being loaded onto an aircraft.
Figure 3 is a schematic diagram of a vision system with a computing device configured to receive image data from cameras and with the computing device configured to transmit information to remote nodes.
Figure 4 is a flowchart diagram of a method of monitoring cargo.
Figure 5 is a schematic diagram of a method of monitoring cargo.
Figure 6 is a schematic diagram of a bounding box.
Figure 7 is a diagram of a bounding box imposed on a unit of cargo within an image.
Figure 8 is a schematic diagram of aspects of criteria of a vision system.
Figure 9 is a schematic diagram of processing of an image including three-dimensional aspects of a bounding box, segmentation mask, and classification.
Figure 10 is a schematic diagram of generating a track list.
Figure 11 is a schematic diagram of generating a reconstruction package.
Figure 12 is a schematic diagram of generating a three-dimensional mesh model.
Figure 13 is a schematic diagram of a computing device.

### DETAILED DESCRIPTION

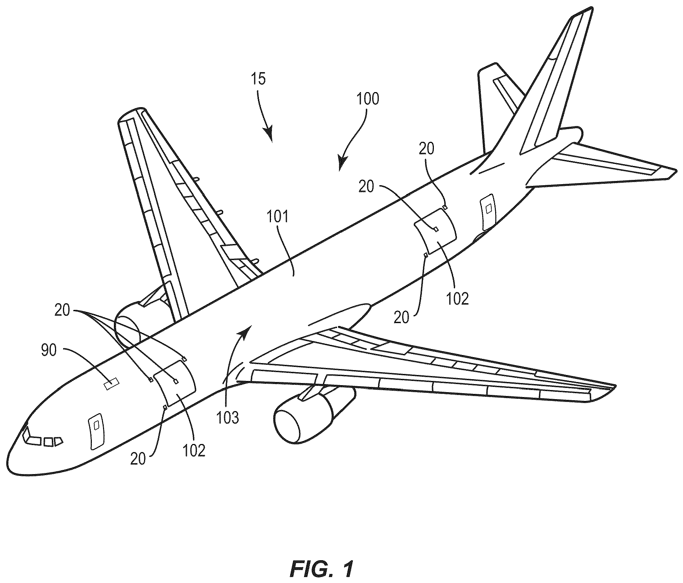

The present application is directed to a vision system to detect and track objects that are moving through an area. The vision system can be used in a variety of different contexts with a variety of different objects. Figure 1 illustrates one context in which the vision system 15 integrated with an aircraft 100 to monitor cargo that is being loaded and/or unloaded. The vehicle 100 includes a fuselage 101 that includes an interior space 103 configured to hold the cargo. One or more openings 104 with corresponding doors 102 provide for loading and unloading the cargo within the interior space 103. Cameras 20 are positioned at the openings 104 to detect the cargo during loading and unloading. A computing device 90 receives signals from the camera 20 and monitors the cargo 200. The cameras 20 are passive in that they do not emit active energy such as lasers. The passive cameras 20 make it more suitable for deployment and operation at airports that have restrictive requirements.

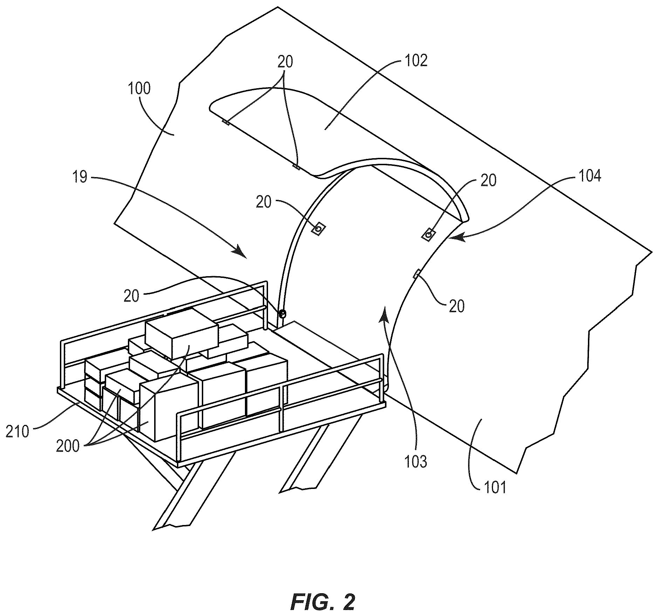

Figure 2 illustrates a work area 19 in which cargo 200 is loaded and unloaded from the aircraft 100. In this examples, the work area 19 includes a platform 210 and/or interior space 103 of the aircraft 100. The platform 210 is sized to support the cargo 200 and is adjustable to be aligned with the door 102. During loading, the cargo 200 is moved from the platform 210 and through the opening 104 and into the interior space 103 of the aircraft 100. Unloading is performed in a reverse manner in which the cargo 200 is removed from the interior space 103, through the opening 104, and onto the platform 210 or tarmac.

The cameras 20 are positioned on the vehicle 100 to capture images of the cargo 200 as it moves through the opening 104. The cameras 20 are mounted to the vehicle 100 at various locations, including on one or more of the door 102, on the fuselage wall at the opening 104, and within the interior space 103. The cameras 20 are configured to capture individual discrete images of the cargo 200 and/or video of the cargo 200 and are configured to capture one or both of two-dimensional and three-dimensional images. In some examples, the cameras 20 are depth-sensing cameras that add a depth channel to each image. In some examples, the use of depth increases the reliability of the system.

Multiple cameras 20 are positioned in the work area 19 to capture images of the cargo 200. In the example of Figure 2, three cameras 20 are positioned at the door 102. The cameras 20 are positioned to capture images of the cargo 200 from different perspectives to enable detecting the three-dimensional shape and size. The cameras 20 are positioned to obtain dissimilar perspectives of the cargo 200.

In some examples, the cameras 20 include a fixed field of view. This provides for sequences of images to be captured that include the cargo 200 moving across the field of view. For example, a first image in the sequence captures the cargo 200 at a first side of the image, a second image captures the cargo 200 at a center of the image, and a third image captures the cargo on an opposing second side of the field of view. In other examples, the cameras 20 have a movable field of view and the cameras pivot or otherwise move to follow the movement of the cargo 200 through the work area 19.

The cargo 200 can be grouped into a variety of different classes. One class are containers that have outer walls with an enclosed interior that is sized to hold various goods. In some examples, the containers are shaped and sized to conform to the dimensions of the cargo hold within the aircraft 100. Another class of cargo 200 are pallets on which packages (e.g., boxes, crates) are stacked and held together with wrapping material. In some examples, the different types of cargo are each referred to as unit load devices (ULD).

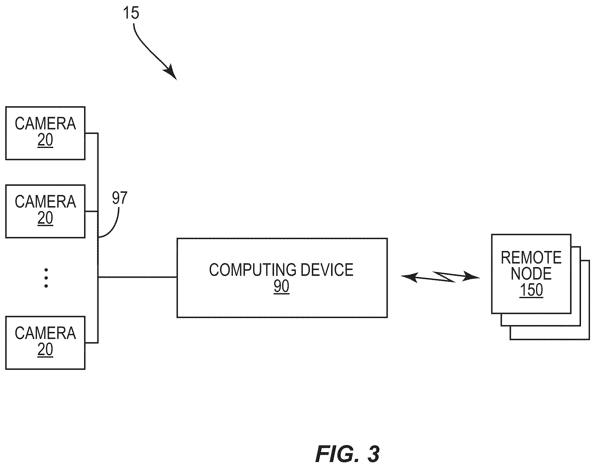

Figure 3 illustrates a schematic diagram of a vision system 15 that includes a computing device 90 and cameras 20. In one example, the cameras 20 communicate with the computing device 90 through a data bus 97. The cameras 20 send the images to the computing device 90 through various other wireless and wired structures. The computing device 90 processes the image data to monitor the cargo 200. Computing device 90 is further configured to communicate information with one or more remote nodes 150 that are located off the aircraft 100, such as but not limited to a shipping company that is shipping the cargo, or the airline that is responsible for the aircraft 100.

In some examples, the computing device 90 is integrated with the vehicle 100. The computing device 90 can be a stand-alone device that provides just for monitoring cargo 200. In other examples, the computing device 90 performs one or more additional functions. For example, the computing device 90 is part of the flight control computer that oversees the operation of the vehicle 100. In another example, the computing device 90 is part of an overall vision system that comprises cameras 20 located throughout the vehicle 100 and is used for monitoring passengers and/or cargo. In other examples, the computing device 90 is not integrated with the vehicle 100. The computing device 90 is separate and receives the image data from the cameras 20. One example includes the computing device 90 being a remote server that is positioned away from the aircraft 100 and any corresponding airport.

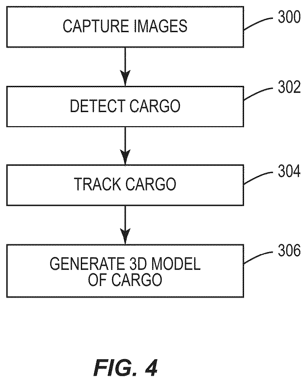

The vision system 15 is configured to monitor the cargo 200 as it moves within the work area 19. Figure 4 illustrates one method of the vision system 15 that includes capturing images of the cargo 200 as it moves along the work area 19 and past the cameras 20 (block 300). Multiple cameras 20 are positioned to capture the images from different perspectives to enable processing the cargo 200 in three-dimensional space. The image data is processed with the cargo 200 being detected in the images (block 302). The processing includes generating a three-dimensional bounding box around the cargo 200 in the images to enable tracking of the cargo 200 (block 304). The method segments the cargo 200 and traces the contour in the images to isolate/mask the part of the image that belongs to the cargo with the masked images used to generate a three-dimensional digital representation of the cargo 200 (block 306).

The vision system 15 enables evaluating the efficiency of the cargo. The bounding box is a three-dimensional frame that extends around the perimeter of the cargo 200. The volume that is filled by the cargo 200 within the bounding box is used to evaluate the packing quality of the cargo 200. A higher packing quality places more cargo within the volume of the bounding box. This also enables a determination of the residual volume of the cargo 200. For example, a first unit of cargo includes a pallet with different shapes and sizes of packages that are stacked together. The different shapes/sizes results in empty spaces positioned between the packages and a relatively low packing quality. A second unit of cargo includes a pallet with a number of packages each have a cube shape. The uniform shapes enables the packages to be stacked together in abutting relationship which reduces/eliminates spaces and results in a relatively high packing quality.

In some examples, the method further comprises determining a residual volume of the cargo and reorganizing the cargo to reduce or eliminate the residual volume so as to reach a relatively higher packing quality. The residual volume is determined by the difference between the volume of the bounding box and the occupied volume of a three-dimensional mesh model of the cargo. This residual volume quantifies the unfilled space within the bounding box and is used to implement a reorganization step of the cargo that adjusts placement and orientation of the packages to reduce or eliminate the residual volume and thereby improve packing quality.

For example, the reorganization step of cargo may be executed when the determined volume is below a predefined threshold. The threshold is defined as a quantitative limit expressed in cubic meters or as a percentage of the three-dimensional bounding box volume. The threshold may further be adapted based on cargo class, safety clearance constraints, and measurement uncertainty.

In some examples, the method further comprises a step of determining the efficiency of the cargo 200 as a ratio of the amount of volume occupied by the cargo 200 within the volume defined by the bounding box 80 relative to the overall volume of the bounding box 80. Volume within the bounding box 80 that is not occupied by the packages is inefficient.

In some examples, a three-dimensional model is created for each unit of cargo 200 that moves through the work area 19. In other examples, the methods identify the classification for the units of cargo 200 and generate three-dimensional models for a limited number of the classes (e.g., three-dimensional models are generated just for pallets).

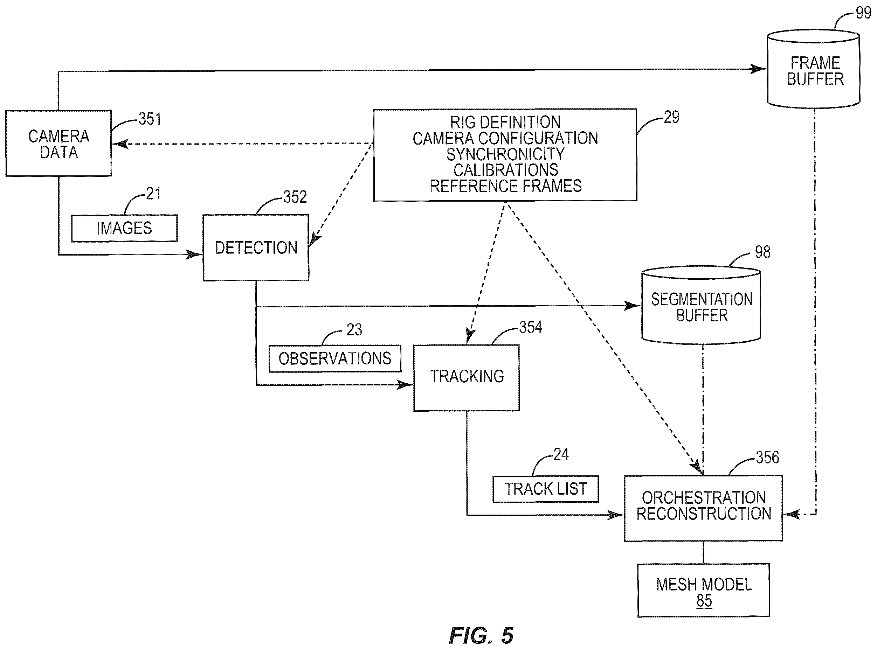

Figure 5 illustrates a process flow diagram of a method of monitoring cargo 200. In this example, three cameras 20 capture images 21 of the cargo 200 (block 351). The capture rate of the cameras 20 can be the same or different. In one specific example, the capture rate is 5Hz. In other examples, the cameras 20 capture images 21 at different rates with a higher rate occurring when the cargo 200 is in closer proximity to the camera 20 and a slower rate when the cargo 200 is more distant. In some examples, the cameras 20 are synchronized to capture images 21 at known timings. The images 21 from the cameras 20 are stored at a frame buffer 99.

The cargo is detected in the images 21 (block 352). In some examples, the identification uses semantic segmentation. Semantic segmentation is a deep learning algorithm that associates a label or category with the pixels in the image 21. The computing device 90 identifies the collection of pixels that form the cargo 200. The computing device 90 also identifies the pixels in the image 21 that are not part of the cargo 200. In some examples, these other pixels are identified as a different object.

In one example, the computing device 90 is trained through the use of a convolutional neural network to perform the cargo detection. The convolutional neural network is a deep learning algorithm that takes an image, assigns an importance such as weights and biases to the various different aspects in the image, and is able to differentiate the aspects.

In some examples, the computing device 90 uses a three-dimensional bounding box detection technique. These techniques identify three-dimensional objects and determine how the objects relate to each other in space. The techniques use the input of two-dimensional images 21. The techniques place three-dimensional bounding boxes around objects in the images and determine coordinates for the corners of the boxes. The three-dimensional bounding box provides a simple approximation of the moving cargo 200 where knowledge of the overall size and position of the cargo 200 is required.

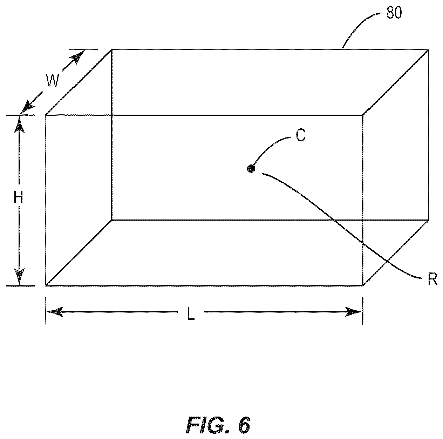

Figure 6 illustrates an example of a bounding box 80 that is generated to extend around cargo 200 that is identified in an image 21. The bounding box 80 is an approximation of the cargo in the image 21. The bounding box 80 includes three-dimensional sizing including a length 1, width w, and height h and an origin such as a center of gravity C. In some examples, the position of the cargo 200 is initially determined in a local frame of reference. The local frame is defined at the center of gravity C of the bounding box 80 with major axes of the bounding box 80 extending along the three dimensions (length 1, width w, height h).

The detection process further converts the image data from the perspective of an individual image 21 captured by one of the cameras 20 into a single three-dimensional Cartesian frame of reference (e.g., a world frame) that is used to track the position of the cargo 200 within the work area 19. The transformation between the local frame of reference and the three dimensional Cartesian frame of reference occurs along the six degrees of freedom between the two reference frames. Detecting the cargo 200 using bounding boxes 80 provides advantages that are not available in other techniques. The methods directly produce a three-dimensional representation of the cargo 200 that enables multi-camera tracking in a three-dimensional Cartesian frame. Two-dimensional approaches require additional steps and/or assumptions.

The detection further includes a pose estimation R that determines the position and orientation of the cargo 200. The pose estimation R is determined relative to the Cartesian frame of reference.

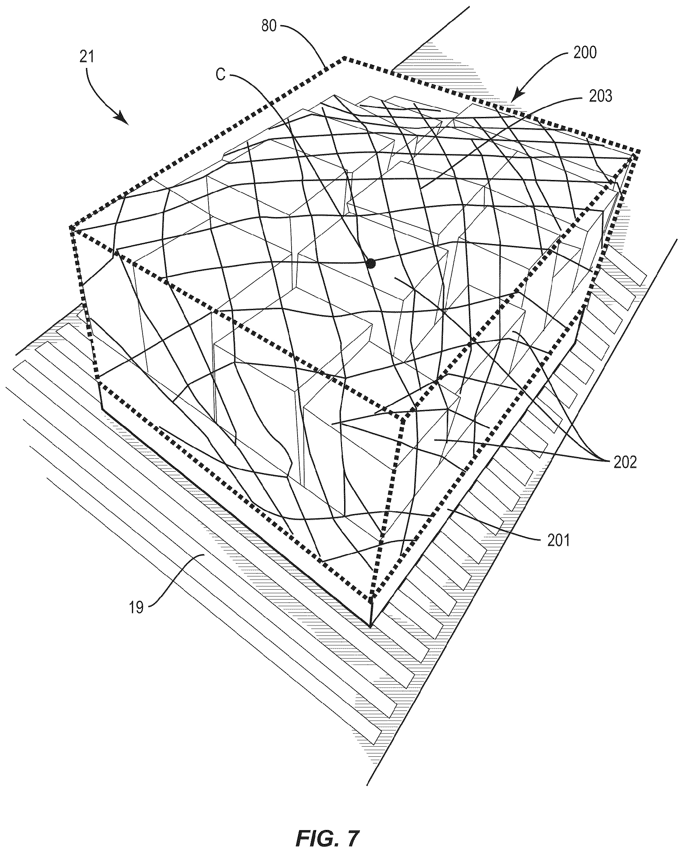

Figure 7 illustrates an example of an image 21 of a unit of cargo 200 being moved within a work area 19. In this example, the unit of cargo 200 includes a pallet 201 with stacked packages 202. A net 203 extends over the packages 202 to maintain their position on the pallet 201. During image processing, a bounding box 80 is generated that corresponds to the overall size of the cargo 200. The bounding box 80 is fitted to the geometry of the cargo 200 and is a simple approximation of the moving cargo 200 that roughly estimates the overall size and position.

The efficiency of the cargo 200 is determined based on the bounding box 80. As illustrated in Figure 7, the bounding box 80 extends around a perimeter of the cargo 200. The bounding box 80 defines a volume of space. The determination includes determining the amount of space within the bounding box 80 that is actually occupied by the cargo 200. In the example of Figure 7, this includes the pallet 201 and the packages 202. The efficiency of the cargo 200 is determined as a ratio of the amount of space occupied within the volume defined by the bounding box 80 relative to the overall volume of the bounding box 80. Space within the bounding box 80 that is not occupied is inefficient. In some examples, the efficiency of the packaging for cargo 200 that includes a pallet 201 uses a shape that conforms to the dimensions of the cargo hold. In one example for an aircraft 100, the shape conforms to the curvature of the crown of the ceiling. In other examples, a maximum volume includes a space that overhangs on a side of the pallet to conform to the chamfered walls of the cargo hold of an aircraft 100.

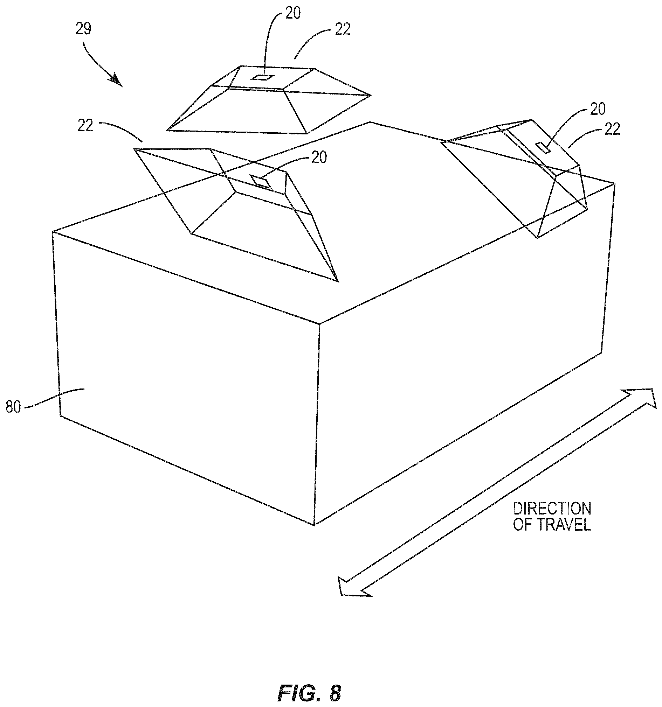

A rig definition 29 is baseline information used by the computing device 90. As illustrated in Figure 8, the rig definition 29 includes a capture volume and tracking frame of the bounding box 80, and a direction of travel of the cargo 200. The rig definition 29 includes camera frames 22 for the cameras 20 and their relative positioning in the work area 19. The rig definition 29 also includes but is not limited to the camera configurations, synchronization of the cameras 20, calibrations of the cameras 20, and reference frames of the cameras 20 relative to the work area 19.

The detection process generates observations 23 for the images 21. The observations 23 include image metadata including a time stamp, camera identification, individual observations, and a segmentation mask. An individual observation 23 contains an identification that is unique to the cargo 200 in the image 21, an estimated geometry of the bounding box 80 in the camera frame, and an estimated classification.

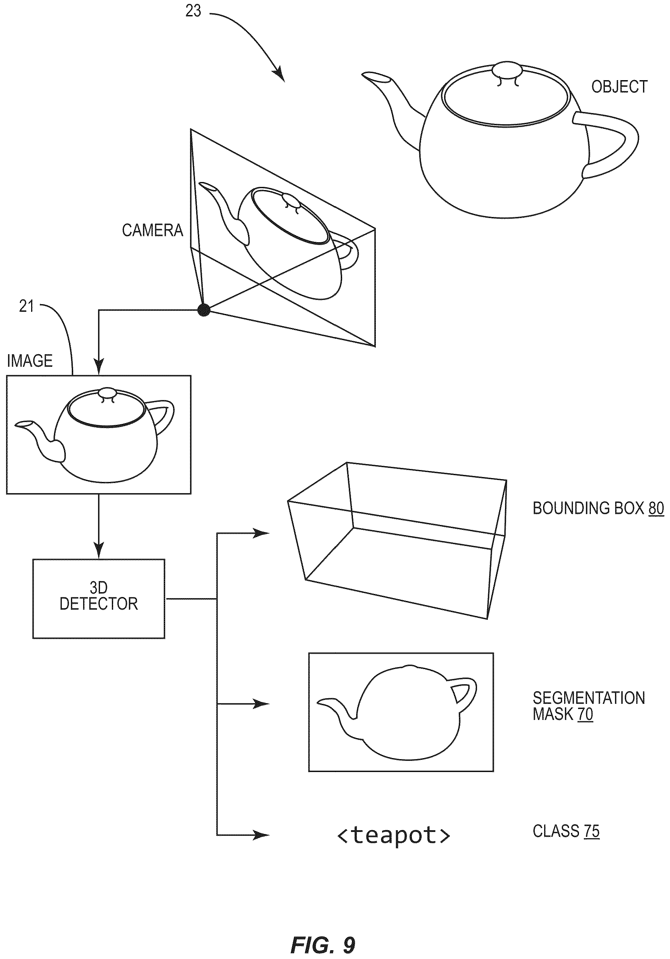

Figure 9 illustrates an example of an image observation 23. In this example, the object in the image is a teapot. The image 21 provides for the bounding box 80 for the object, a segmentation mask 70, and an estimated classification 75. The segmentation mask 70 is the portion of the image that corresponds to the object. In this example, the segmentation mask 70 corresponds to the portion of the image 21 that includes the teapot. The segmentation mask 70 removes or otherwise ignores portions of the image other than the object. In some examples, the segmentation mask 70 identifies the pixels within the object. The classification identifies the object in the image as being from a particular class of objects. In some examples that analyze cargo, the classification identifies the cargo units as either containers or pallets.

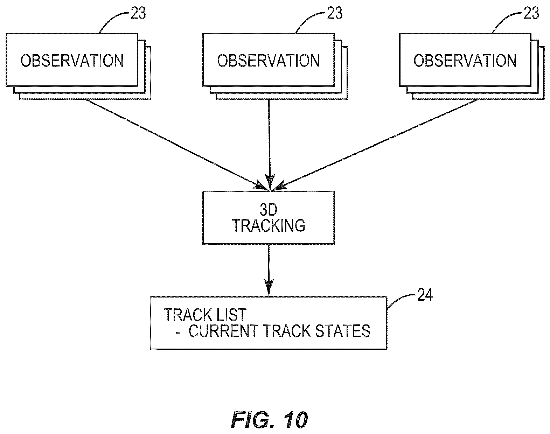

The processing tracks the location of the cargo 200 using the overall Cartesian frame (block 354). In some examples, the tracking uses a particular aspect of the bounding box 80 such as but not limited to the center of gravity C or a corner. Figure 10 illustrates an overview of the tracking process. The process fuses and smooths observations 23 of the individual images 21 from the cameras 20 into actionable three-dimensional tracks that are in the overall Cartesian frame. The generated tracks produce a track list 24 of the locations of the cargo 200 as it moves through the work area 19.

In some examples, the initial determination of the track is considered a provisional track for each unit of cargo 200. The provisional track is based on data from one or more initial images 21 of the cargo 200 as it initially moves into the work area 19. The track is then promoted to a mature state when the track is supported by a larger number of observations 23.

The tracks of the track list 24 includes a variety of different data. Data includes but is not limited to a unique identification, an updated timestamp, a maturity of the track, a classification (e.g., pallet, container, other), the pose estimation, an uncertainty of the pose estimation, a velocity of movement, an extent of the bounding box 80, and a motion model (e.g., static, moving, rotating). In some examples, the tracks also include the associated observations 23.

The track of the cargo 200 is terminated after a predetermined number of missed detections. A missed detection occurs when the cargo 200 is occluded or out of view in the images 21. For example, after the cargo 200 moves out of the field of view of the vision system 15 after moving through the work area 19.

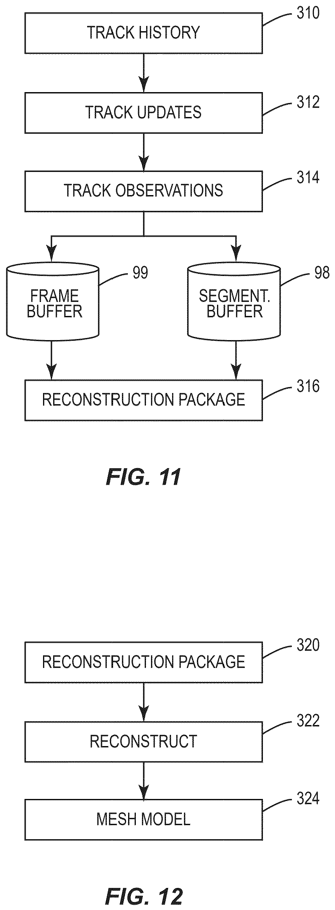

The process further includes generating a three-dimensional model 85 of the unit of cargo 200 through orchestration and reconstruction (block 356). One process of orchestration is included in Figure 11 that uses the track history (block 310), track updates (block 312), track observations (block 314), and data from the frame buffer 99 and a segmentation buffer 98. The reconstruction package (block 316) contains the images and masks associated with the track updates. For each observation, the source image is retrieved from the frame buffer 99. The associated mask is produced by fetching the corresponding segmentation mask and zeroing out pixels that do not fall on the cargo 200. In some examples, an indexing key is determined from an observation and used to query a matching image mask from the buffer. In some examples, the reconstruction package uses track updates with non-zero speeds in which the cargo 200 is moving to prevent duplicate images.

Reconstruction that generates the three-dimensional mesh model 85 is generally shown in Figure 12. The process uses the reconstruction package (block 320) and produces a point cloud corresponding to the cargo 200 (block 322). The point cloud is converted into the three-dimensional mesh model (block 324). In some examples, the mesh model 85 is a three-dimensional representation of the cargo that uses polygons to define the shape. The model includes vertices, edges, and faces which are connected together to form the structure.

In some examples, a three-dimensional mesh model is generated for each unit of cargo 200. In other examples, a three-dimensional mesh model is generated for just one or more classes of cargo 200. In one specific example, a three-dimensional mesh model is generated just for cargo units that are pallets.

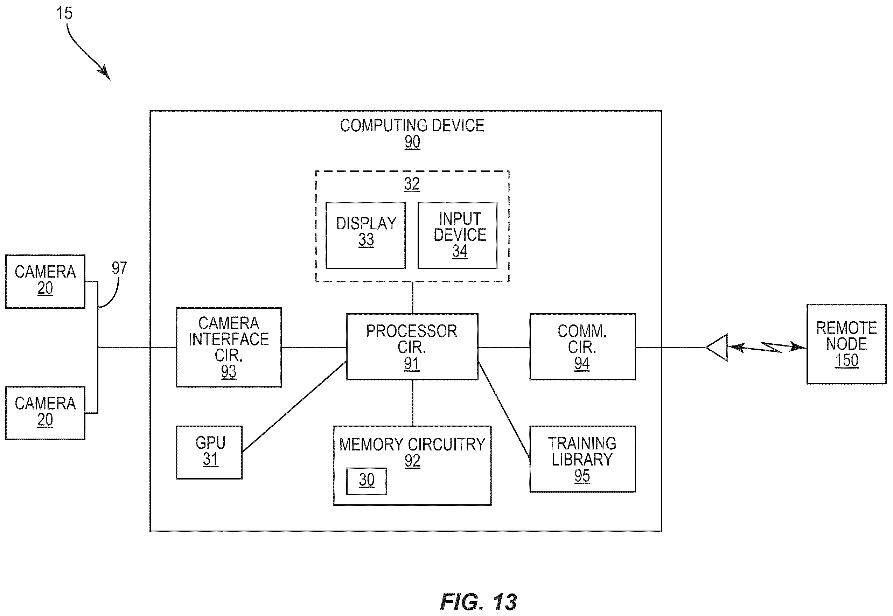

The computing device 90 processes the image data to monitor the cargo 200. As illustrated in Figure 13, the computing device 90 includes processing circuitry 91, memory circuitry 92, camera interface circuitry 93, and communication circuitry 94. The processing circuitry 91 controls overall operation of the vision system 15 according to program instructions 30 stored in the memory circuitry 92. The processing circuitry 91 can include one or more circuits, microcontrollers, microprocessors, hardware, or a combination thereof. The processing circuitry 91 can include various amounts of computing power to provide for the needed functionality.

Memory circuitry 92 includes a non-transitory computer readable storage medium storing program instructions, such as a computer program product, that configures the processing circuitry 91 to implement one or more of the techniques discussed herein. Memory circuitry 92 can include various memory devices such as, for example, read-only memory, and flash memory. Memory circuitry 92 is configured to support loading of the images into a runtime memory for real time processing and storage. In one example, the memory circuitry 92 includes a solid state device (SSD).

The computing device 90 includes a graphics processing unit (GPU) 31. The GPU 31 is a specialized electronic circuit designed to manipulate and alter the memory circuitry 92 to accelerate the processing of images, particularly for detection and segmentation and output to the segmentation buffer 98. In some examples, the output to the frame buffer 99 bypasses the GPU 31. The GPU 31 can include various amounts of computing power to provide for the needed functionality. In one example, the GPU 31 has greater than 1 teraflops of computing power. This processing capability provides for large scale machine learning. In one example, the computing device 90 includes a separate GPU 31. In another example, this processing is performed at the processing circuitry 91.

Camera interface circuitry 93 provides for receiving the images from the cameras 20. The camera interface circuitry 93 can provide for one-way communications from the cameras 20 or two-way communications that are both to and from the cameras 20.

Communication circuitry 94 provides for communications to and from the computing device 90. The communications can include communications with other circuitry on the vehicle 100 (e.g., vehicle control system) and/or communications with a remote node 150. Communication circuitry 94 provides for sending and receiving data with remote nodes 150. The computing device 90 is configured to communicate with a remote node 150 through one or more different communication channels. Communications can occur through one or more of a mobile communication network, a wireless local area network, and one or more satellites.

A user interface 32 provides for a user to access data about the cargo 200. The user interface 32 includes one or more input devices 34 such as but not limited to a keypad, touchpad, roller ball, and joystick. The user interface 32 also includes one or more displays 33 for displaying information to regarding the cargo 200 and/or for an operator to enter commands to the processing circuitry 91.

In some examples, the computing device 90 stores training images at a training library 95. The training images can be a separate storage within the computing device 90, part of memory circuitry 92, or a separate component stored remotely from the computing device 90 such as a remote database. In one example, the training images are captured from different perspectives than the perspectives captured by the cameras 20. In another example, the training images include videos of cargo 200 in different settings (e.g., cargo on a runway of a loading area, cargo being moved by an airport cart). The stored images are sent to a training device that performs the training.

In some examples, the vision system 15 is integrated into a vehicle 100. The vision system 15 can used on a variety of vehicles 100. Vehicles 100 include but are not trucks, trains, ships, and aircraft. The vision system 15 can also be used in other contexts. Examples include but are not limited to warehouses, airport loading facilities, and distribution centers.

By the term "substantially" with reference to amounts or measurement values, it is meant that the recited characteristic, parameter, or value need not be achieved exactly. Rather, deviations or variations, including, for example, tolerances, measurement error, measurement accuracy limitations, and other factors known to those skilled in the art, may occur in amounts that do not preclude the effect that the characteristic was intended to provide.

The present invention may, of course, be carried out in other ways than those specifically set forth herein without departing from essential characteristics of the invention. The present embodiments are to be considered in all respects as illustrative and not restrictive, and all changes coming within the meaning and equivalency range of the appended claims are intended to be embraced therein.

Further, the present disclosure comprises, without limitation, the following examples:

According to a first example, there is provided a method of monitoring cargo that is moving within a work area, the method comprising:
capturing images of the cargo with cameras as the cargo moves through the work area;
detecting the cargo in the images;
generating an approximation of the cargo in the images with a three-dimensional bounding box that
extends around the cargo;
tracking a position of the cargo and movement of the cargo through the work area based on a location
within a three-dimensional Cartesian frame of the bounding box in the images; and
generating a three-dimensional mesh model of the cargo.

Example 2. The method of example 1, further comprising:
classifying the cargo into one of a plurality of classifications; and generating the three-dimensional mesh model of the cargo for just one of the plurality of classifications.

Example 3. The method of example 1, further comprising identifying the cargo from the images and classifying the cargo.

Example 4. The method of example 1, further comprising positioning the bounding box around a perimeter of the cargo in the images.

Example 5. The method of example 1, further comprising determining coordinates for corners of the bounding box in the images.

Example 6. The method of example 1, further comprising:
determining local coordinates of the bounding box from the images;
converting the local coordinates into the three-dimensional Cartesian frame; and tracking a position of the cargo in the work area based on the Cartesian frame.

Example 7. The method of example 1, wherein capturing the images of the cargo comprises capturing the images while the cargo is being loaded onto an aircraft.

Example 8. The method of example 1, further comprising:
determining that the cargo is not included in the images that were captured after a time period; and
determining that the cargo has moved out of the work area after the time period.

Example 9. The method of example 1, further comprising:
determining positions of the bounding box relative to a local coordinate system of the cameras in the images; and converting the positions in the local coordinate system to the three- dimensional Cartesian frame and tracking the cargo relative to the three dimensional Cartesian frame.

Example 10. According to another example, there is provided a computing device configured to monitor cargo within a work area, the computing device comprising:
processing circuitry; and
memory circuitry comprising program instructions therein that, when executed by the processing circuity, configures the computing device to:
   receive images of the cargo that is moving in the work area;
   generate a three-dimensional bounding box in the images with the bounding box extending around a perimeter of the cargo in the images;
   convert local coordinates of the bounding box in the images to overall coordinates of the work area; track a path of the cargo through the work area using the overall coordinates; and generate a three-dimensional mesh model of the cargo.

Example 11. The computing device of example 10, wherein the processing circuitry is configured to determine that the cargo has moved out of the work area after determining that the cargo does not appear in a predetermined number of the images.

Example 12. The computing device of example 10, further comprising cameras that are configured to be mounted in different points in the work area, the cameras configured to capture the images of the cargo from different perspectives.

Example 13. The computing device of example 12, wherein the cameras are configured to be mounted at a door of a vehicle.

Example 14. The computing device of example 10, wherein the processing circuitry is further configured to classify the cargo as being from one of a plurality of different classes based on the images.

Example 15. The computing device of example 14, wherein the processing circuitry is further configured to generate the mesh model just for the cargo that is in a first classification.

Example 16. The computing device of example 10, further comprising communication circuitry configured to upload through a communication network a position of the cargo in the work area.

Example 17. According to another example, there is provided a computing device configured to monitor cargo within a work area, the computing device comprising:
processing circuitry; and memory circuitry comprising program instructions therein that, when executed by the processing circuity, configures the computing device to:
receive images from cameras that are spaced apart in the work area;
detect cargo in the images;
estimate a three-dimensional position of the cargo and a bounding box around the cargo relative to one of the cameras;
convert the three-dimensional position of the bounding box in the images to a three dimensional Cartesian frame; and
track a location of the cargo through the work area based on the position of the bounding box in the images.

Example 18. The computing device of example 17, wherein the processing circuitry is further configured to:
trace contours of the cargo in the images;
create masked images that mask the part of the image corresponding to the cargo based on the contours;
and reconstruct the cargo based on the masked images.

Example 19. The computing device of example 17, wherein the processing circuitry is further configured to:
determine a position on the bounding box; and
track the location of the cargo in the work area based on the position on the bounding box.

Example 20. The computing device of example 17, wherein the computing device is integrated within an aircraft, and the processing circuitry is further configured to operate an aspect of the aircraft during flight.

## Claims

1. A method of monitoring cargo (200) that is moving within a work area (19), the method comprising:
capturing images (21) of the cargo (200) with cameras (20) as the cargo (200) moves through the work area (19);
detecting the cargo (200) in the images (21);
generating an approximation of the cargo (200) in the images (21) with a three-dimensional bounding box (80) that extends around the cargo (200);
tracking a position of the cargo (200) and movement of the cargo (200) through the work area (19) based on a location within a three-dimensional Cartesian frame of the bounding box (80) in the images (21); and
generating a three-dimensional mesh model (85) of the cargo (200).

2. The method of claim 1, further comprising:
classifying the cargo (200) into one of a plurality of classifications; and
generating the three-dimensional mesh model (85) of the cargo (200) for just one of the plurality of classifications.

3. The method of any of claims 1 to 2, further comprising determining coordinates for corners of the bounding box (80) in the images (21).

4. The method of any of claims 1 to 3, further comprising:
determining local coordinates of the bounding box (80) from the images (21);
converting the local coordinates into the three-dimensional Cartesian frame; and
tracking a position of the cargo (200) in the work area (19) based on the Cartesian frame.

5. The method of any of claims 1 to 4, wherein capturing the images (21) of the cargo (200) comprises capturing the images (21) while the cargo (200) is being loaded onto an aircraft.

6. The method of any of claims 1 to 5, further comprising:
determining positions of the bounding box (80) relative to a local coordinate system of the cameras (20) in the images (21); and
converting the positions in the local coordinate system to the three- dimensional Cartesian frame and tracking the cargo (200) relative to the three dimensional Cartesian frame.

7. The method of any of claims 1 to 6, further comprising:
determining a residual volume of the cargo; and
reorganizing the cargo to reduce or eliminate the residual volume so as to reach a relatively higher packing quality.

8. A computing device configured to monitor cargo (200) within a work area (19), the computing device comprising:
a processing circuitry (91); and
a memory circuitry (92) comprising program instructions (30) therein that, when executed by the processing circuity (91), configures the computing device to:
receive images (21) of the cargo (200) that is moving in the work area (19);
generate a three-dimensional bounding box (80) in the images (21) with the bounding box (80) extending around a perimeter of the cargo (200) in the images (21);
convert local coordinates of the bounding box (80) in the images (21) to overall coordinates of the work area (19);
track a path of the cargo (200) through the work area (19) using the overall coordinates;
and
generate a three-dimensional mesh model (85) of the cargo (200).

9. The computing device of claim 8, wherein the processing circuitry (91) is configured to determine that the cargo (200) has moved out of the work area (19) after determining that the cargo (200) does not appear in a predetermined number of the images (21).

10. The computing device of claim 8 or 9, further comprising cameras (20) that are configured to be mounted in different points in the work area (19), the cameras (20) configured to capture the images (21) of the cargo (200) from different perspectives.

11. The computing device of any of claims 8 to 10, further comprising communication circuitry (94) configured to upload through a communication network a position of the cargo (200) in the work area (19).

12. The computing device of any of claims 8 to 11, configured to monitor cargo (200) within a work area (19), wherein the computing device is further configured to:
receive images (21) from cameras (20) that are spaced apart in the work area (19);
detect cargo (200) in the images (21);
estimate a three-dimensional position of the cargo (200) and the bounding box (80) around the cargo (200) relative to one of the cameras (20);
convert the three-dimensional position of the bounding box (80) in the images (21) to a three dimensional Cartesian frame; and
track a location of the cargo (200) through the work area (19) based on the position of the bounding box (80) in the images (21).

13. The computing device of claim 12, wherein the processing circuitry is further configured to:
trace contours of the cargo (200) in the images (21);
create masked images (21) that mask the part of the image corresponding to the cargo (200) based on the contours; and
reconstruct the cargo (200) based on the masked images (21).

14. The computing device of claim 12 or 13, wherein the processing circuitry is further configured to:
determine a position on the bounding box (80); and
track the location of the cargo (200) in the work area (19) based on the position on the bounding box 80.

15. The computing device of any of claims 8 to 14, wherein the computing device is integrated within an aircraft and the processing circuitry is further configured to operate an aspect of the aircraft during flight.
